# DEMANDE DE BREVET EUROPEEN

(11) **EP 1 760 865 A1**
(43) Date de publication de la demande: **07.03.2007**
(21) Numéro de dépôt: 06291361.1
(22) Date de dépôt: 25.08.2006
(51) Int. Cl.: H02K 23/66, H02K 7/14

(54) **Appareil électrique de traitement de produits alimentaires doté d'un capteur de vitesse de rotation de l'arbre-moteur**

(30) Priorité: 29.08.2005 FR 0508830
(71) Demandeur: Electrolux Professionnel, 60300 Senlis (FR)
(72) Inventeur: Lagier, Christophe, 23200 Aubusson (FR); Paturel, Bruno, 23200 Aubusson (FR)
(74) Mandataire: Jacobson, Claude

(57) **Abrégé**

Cet appareil comporte :
- un carter (3),
- un moteur électrique (7) ayant un arbre de sortie rotatif (23), agencé dans le carter (3) et prévu pour entraîner un organe de traitement de produits,
- un dispositif de contrôle et de commande du moteur, comprenant un dispositif (57) de mesure sans contact de la vitesse de rotation de l'arbre-moteur (23).

Le dispositif de mesure (57) comprend un capteur à effet Hall (58) solidaire du carter (3), et un organe associé (59) de codage, solidaire en rotation de l'arbre (23), et agencé pour influencer ledit capteur (58).

## Description

La présente invention concerne un appareil électrique de traitement de produits alimentaires comportant :
- un carter,
- un moteur électrique ayant un arbre de sortie rotatif, agencé dans le carter et prévu pour entraîner un organe de traitement de produits,
- un dispositif de contrôle et de commande du moteur, comprenant un dispositif de mesure sans contact de la vitesse de rotation de l'arbre-moteur.

Dans l'état de la technique, il existe de tels appareils, dont le dispositif de mesure est de type optique, l'arbre-moteur étant solidaire d'une roue codeuse qui interfère avec le trajet d'un rayon lumineux reçu par un détecteur optique.

De tels appareils ne donnent pas entière satisfaction, du fait que la précision de la mesure de vitesse, qui est utilisée pour réguler la vitesse de l'appareil, peut être altérée par un encrassement de l'appareil.

L'invention a pour but de remédier à cet inconvénient, et a pour objet, à cet effet, un appareil du type précité, dans lequel le dispositif de mesure comprend un capteur à effet Hall solidaire du carter, et un organe associé de codage, solidaire en rotation de l'arbre, et agencé pour influencer ledit capteur.

Suivant d'autres caractéristiques, optionnelles, de l'appareil selon l'invention :
- le capteur à effet Hall comprend un organe source produisant un champ magnétique, notamment un aimant permanent, et un organe sensible au champ magnétique de l'organe source, espacé de ce dernier, l'organe de codage passant, au moins partiellement, entre l'organe source et l'organe sensible lors de sa rotation solidaire avec l'arbre ;
- le dispositif de contrôle et de commande comprend un organe de réglage de la vitesse de consigne du moteur, et un organe de commande, relié à l'organe de réglage et au capteur à effet Hall, et adapté pour piloter l'alimentation électrique du moteur en fonction de la valeur de vitesse de consigne et de la valeur de vitesse mesurée ;
- l'organe de commande est adapté pour réguler la vitesse du moteur sur la vitesse de consigne en utilisant la vitesse mesurée comme variable de contrôle ;
- l'organe de commande est adapté pour calculer l'écart entre la valeur de consigne et la valeur mesurée de la vitesse, et le dispositif de contrôle et de commande comprend un témoin de surcharge, relié à l'organe de commande, et activé par ce dernier lorsque l'organe détermine que ledit écart dépasse une valeur de seuil prédéterminée pendant une première durée prédéterminée ;
- l'organe de commande est adapté pour couper l'alimentation du moteur lorsqu'il détecte que ledit écart dépasse ladite valeur de seuil prédéterminée pendant une deuxième durée prédéterminée ; et
- la deuxième durée prédéterminée est supérieure à la première durée prédéterminée.

L'invention s'applique plus particulièrement à un appareil de type mixeur, et plus particulièrement encore à un mixeur du type utilisé dans la préparation alimentaire pour la restauration collective.

Un mode de réalisation va maintenant être décrit plus en détail en référence aux dessins annexés, sur lesquels :
- la Figure 1 et une vue en perspective, coupée dans un plan longitudinal, d'un appareil conforme à l'invention ;
- la Figure 2 et une vue partielle, à plus grande échelle, de l'appareil de la Figure 1, en coupe dans le plan 2-2 ;
- la Figure 3 est une vue analogue à la Figure 2, dans le plan 3-3 indiqué sur la Figure 1; et
- la Figure 4 est un schéma représentant le dispositif de commande et de contrôle du moteur de l'appareil représenté sur les Figures précédentes.

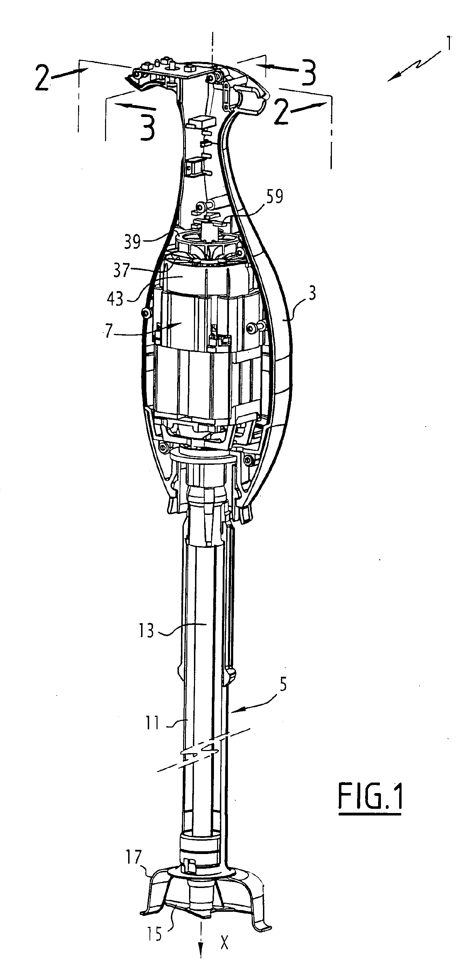

Sur les Figures 1 à 3, on a représenté un appareil 1 conforme à l'invention, du type communément appelé « mixeur ».

Ce mixeur comprend un carter 3 formant poignée, un outil 5 de traitement de produits alimentaires, et un moteur électrique 7, logé dans le carter 3.

L'outil 5 comprend un tube-enveloppe 11 fixé de façon détachable au carter 3 à l'une de ses extrémités, un arbre d'entraînement 13 monté rotatif coaxialement dans le tube 11, et un organe 15 de traitement de produits, tel qu'une lame ou un couteau, solidaire de l'arbre 13. L'organe 15 de traitement des produits fait saillie du tube 11, du côté de l'extrémité libre de ce dernier.

L'outil 5 comporte en outre une cloche 17, solidaire du tube 11 à l'extrémité libre de ce dernier, et prévue pour protéger l'accès à l'organe 15.

Le moteur 7 est relié à l'arbre 13 de façon à pouvoir entraîner en rotation l'organe de traitement 15.

Dans la position d'utilisation de l'appareil 1, telle que représentée sur la Figure 1, l'axe X commun à l'arbre 13 et au tube 11, qui représente également l'axe de rotation de l'organe de traitement 15, est généralement orienté verticalement, l'organe de traitement 1 étant tourné vers le bas.

Dans toute la description qui va suivre, l'appareil 1 sera supposé orienté de cette façon.

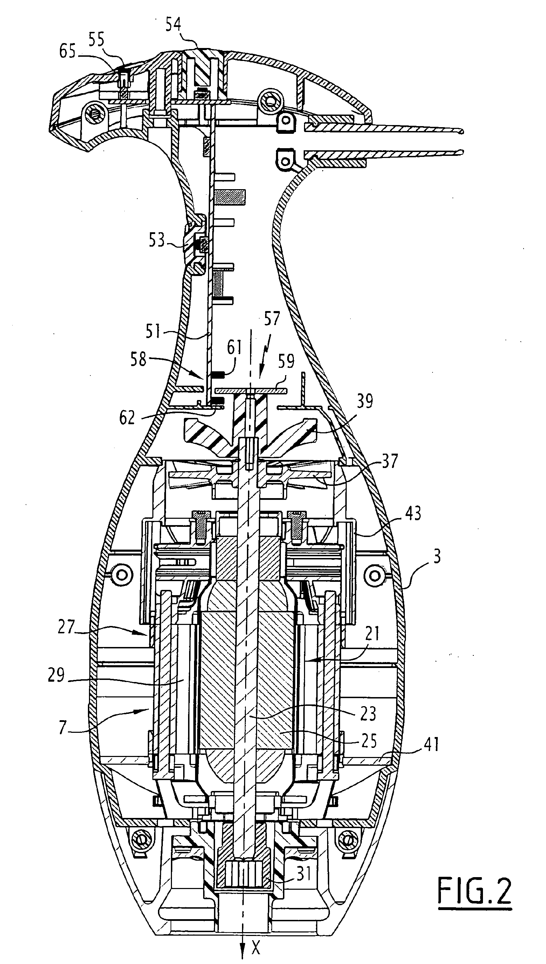

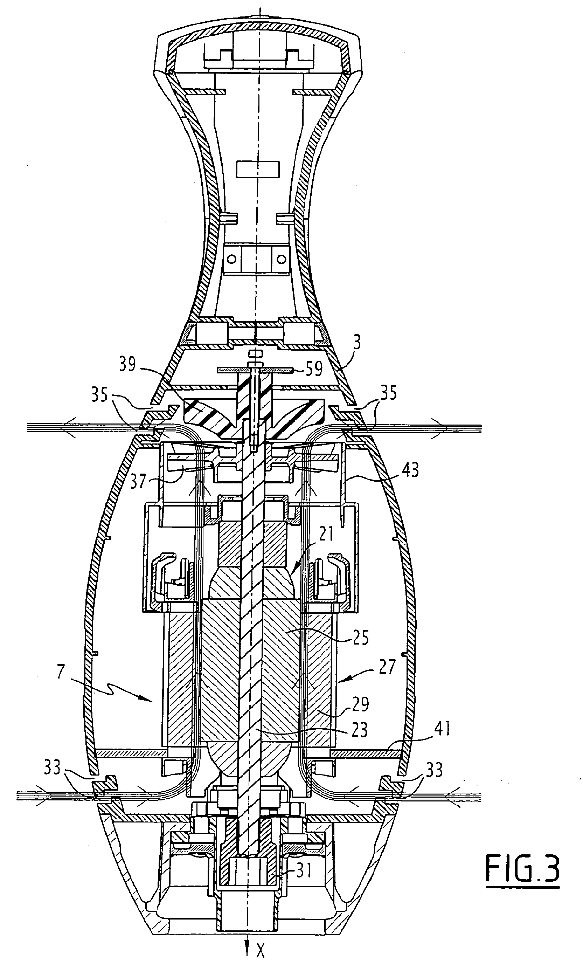

On notera que sur les Figures 2 et 3, auxquelles on se réfère à présent plus particulièrement, l'outil 5 n'a pas été représenté, et ce dans un souci de simplification.

Le moteur 7 est de préférence un moteur de type universel, ayant au rotor 21 un arbre-moteur (ou arbre de sortie moteur) 23, orienté axialement, et un bobinage solidaire 25. Le stator 27 du moteur 7 comprend un bobinage 29 s'étendant radialement à l'extérieur du bobinage rotorique 25.

A son extrémité inférieure, l'arbre-moteur 23 est solidaire d'une pièce d'accouplement 31 dotée d'une forme d'entraînement, prévue pour recevoir une forme d'entraînement complémentaire de l'arbre 13 de l'outil 5, de sorte à former une liaison en rotation détachable entre l'arbre 13 et l'arbre-moteur 23.

L'appareil 1 comporte en outre un dispositif de ventilation prévu pour refroidir le moteur lors du fonctionnement de l'appareil.

Ce dispositif comprend, dans une partie inférieure du carter, des orifices 33 d'entrée d'air agencés de façon périphérique, radialement à l'extérieur par rapport à l'arbre 23.

De façon correspondante, le dispositif de ventilation comporte, dans une partie du carter 3 située plus vers le haut, des orifices 35 de sortie d'air, agencés de façon périphérique, radialement à l'extérieur par rapport à l'arbre 23.

Le bobinage rotorique 25 et le bobinage statorique 29 s'étendent axialement entre les entrées d'air 33 et les sorties d'air 35.

Le dispositif de ventilation comprend d'autre part un ventilateur axial 37 et un ventilateur radial 39 solidaires de l'arbre 23, et agencés du côté de l'extrémité supérieure de ce dernier. Le ventilateur radial 39 est agencé sensiblement au niveau axial des sorties d'air 35, tandis que le ventilateur axial 37 est agencé immédiatement en amont, en considérant le sens d'écoulement d'air des entrées d'air 33 vers les sorties d'air 35.

En d'autres termes, le ventilateur axial 37 est situé au-dessous du ventilateur radial, plus précisément entre ce dernier et les bobinages rotorique 25 et statorique 29.

Le ventilateur axial 37, lors de sa rotation, contribue à une circulation d'air dans une direction générale axiale, les filets d'air s'écoulant de façon hélicoïdale autour de l'axe X.

Le ventilateur radial 39, lors de sa rotation, reçoit en entrée ce flux d'air généralement axial issu du ventilateur axial, et le dirige de façon essentiellement radiale, en direction des orifices 35 de sortie d'air.

Le trajet des filets d'air de refroidissement, mis en mouvement par la rotation des ventilateurs 37, 39, est représenté schématiquement sur la Figure 3.

Il est visible sur cette Figure que l'air de refroidissement circule de façon essentiellement radiale des entrées d'air 33 en direction de l'arbre 23, puis circule essentiellement axialement à l'intérieur du moteur 7, en passant entre les bobinages statorique 29 et rotorique 25. L'air circule ensuite au travers du ventilateur axial 37, puis est diffusé radialement depuis l'axe vers les sorties d'air périphériques 35 par le ventilateur radial 39.

On notera qu'une paroi annulaire 41 du dispositif de ventilation est fixée à l'intérieur du carter 3, de façon à s'étendre radialement entre le stator 27 et le carter 3. Cette paroi 41 empêche la circulation de l'air, depuis les entrées d'air 33, entre le stator 27 et la partie correspondante du carter entourant ce dernier. La paroi 41 force ainsi la circulation d'air, à partir des entrées d'air 33, entre le rotor 21 et le stator 27.

On notera également que le dispositif de ventilation comprend, s'étendant axialement entre le stator 27 et le ventilateur axial 37, un conduit tubulaire axial 43 permettant de canaliser l'air axialement entre le stator et le ventilateur 37, sensiblement jusqu'au niveau des sorties d'air 35, pour éviter de la recirculation d'air à l'intérieur du carter vers les entrées 33 (vers le bas).

On a constaté que l'association du ventilateur axial 37 et du ventilateur radial 39 augmentait sensiblement l'efficacité du dispositif de ventilation à vitesse de rotation d'arbre constante, en augmentant sensiblement le débit d'air traversant les zones privilégiées d'échauffement, situées au niveau des bobinages 25, 29.

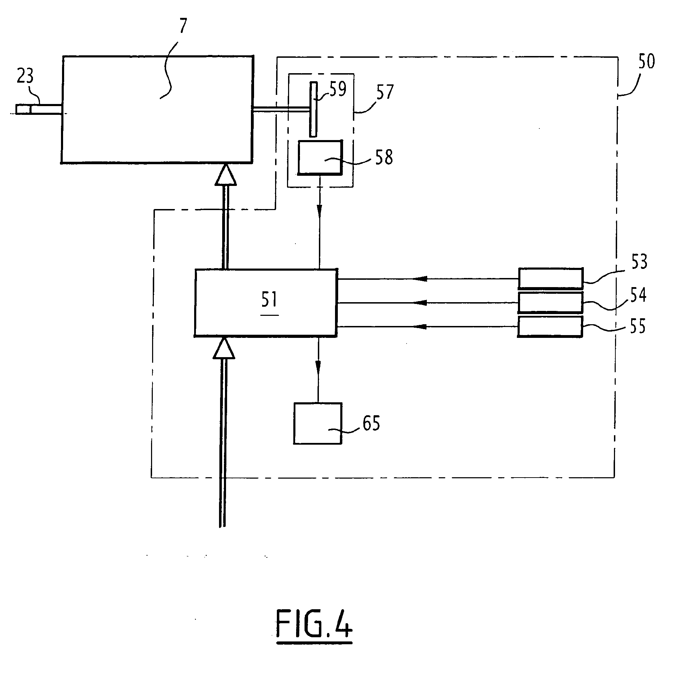

L'appareil 1 comporte en outre un dispositif 50 de contrôle et de commande du moteur 7, dispositif qui a été schématisé sur la Figure 4.

Pour la description qui va suivre de ce dispositif de contrôle et de commande 50, on se reportera plus particulièrement aux Figures 2 et 4.

Le dispositif de contrôle et de commande 50 comprend un organe électronique 51 de commande du moteur, adapté pour piloter l'alimentation électrique de ce dernier. L'organe de commande 51 est réalisé sous la forme d'une carte électronique à circuit imprimé, agencée et fixée à l'intérieur du carter 3.

Le dispositif de contrôle et de commande 50 comprend en outre, agencés dans une partie supérieure du carter et actionnable par l'utilisateur, un bouton 53 de mise en marche, un bouton 54 d'arrêt du moteur, et des boutons 55 de réglage de la vitesse de consigne du moteur. Ces boutons 53, 54, 55 sont reliés électriquement à l'organe de commande 51, de sorte que ce dernier reçoit des signaux d'entrée respectifs représentatifs de leur état.

Le dispositif de contrôle et de commande 50 est pourvu en outre d'un dispositif 57 de mesure sans contact de la vitesse de rotation de l'arbre-moteur 23, ce dispositif 57 étant de type magnétique. Il comporte plus précisément un capteur à effet Hall 58 fixe par rapport au carter 3, et un organe de codage 59 associé, solidaire en rotation de l'arbre-moteur 23.

L'organe de codage 59 est par exemple un barreau de matériau magnétique ou magnétisable, par exemple un barreau de fer doux, apte à dévier les lignes de champ magnétique d'un aimant placé à proximité. Dans l'exemple représenté, l'organe de codage 59 est fixé à l'extrémité supérieure du ventilateur radial 39.

De façon classique, le capteur à effet Hall 58 comprend un organe source 61, tel qu'un aimant permanent, produisant un champ magnétique, et un organe 62 sensible au champ magnétique de l'organe source 61. L'organe sensible 62, qui est alimenté électriquement, est le siège d'une tension de Hall qui est mesurée. Cette mesure est transmise à l'organe de commande 51, auquel le capteur 58 est relié.

L'aimant 61 et l'organe sensible 62, qui sont par exemple fixés sur la carte de circuit imprimé 51, sont espacés l'un de l'autre, de façon que l'organe de codage 59, lors de sa rotation solidaire avec l'arbre-moteur 23, passe entre l'aimant 61 et l'organe sensible 62. En l'occurrence, seules les deux parties d'extrémité du barreau formant organe de codage 59 passent alternativement entre l'aimant 61 et l'organe sensible 62.

Ainsi, lors de sa rotation, l'organe de codage 59 influence le capteur 58 en faisant varier la tension de Hall dans l'organe sensible 62.

On comprend que l'analyse des variations de la tension de Hall dans l'organe sensible 62 permet d'accéder à la valeur de vitesse réelle de l'arbre-moteur 23.

L'organe de commande 51 est adapté, lors du fonctionnement du moteur, pour recevoir la valeur de consigne de vitesse de l'organe de réglage 55, ainsi que la valeur de vitesse mesurée du capteur 58, et pour réguler la vitesse de rotation du moteur sur la vitesse de consigne, en utilisant la vitesse mesurée comme variable de contrôle.

Le dispositif de contrôle et de commande 50 comporte en outre un témoin de surcharge 65, par exemple un témoin lumineux, comme cela est représenté sur la Figure 2, relié électriquement à l'organe de commande 51.

L'organe de commande 51 est adapté pour calculer l'écart entre la valeur de consigne et la valeur mesurée de la vitesse de rotation de l'arbre-moteur 23, reçues respectivement de l'organe de réglage 55 et du capteur 58. L'organe de commande 51 active le témoin de surcharge 65, en l'occurrence déclenche l'émission d'un signal lumineux, lorsque l'écart entre la valeur de consigne et la valeur mesurée de la vitesse dépasse une valeur de seuil prédéterminée, et ce pendant une première durée prédéterminée.

Par exemple, le témoin de surcharge 65 pourra être activé lorsque la vitesse mesurée reste inférieure de 10 à 20% (de préférence 15%) à la valeur de consigne, pendant 1 minute ou plus.

De façon optionnelle, l'organe de commande 51 peut être adapté pour couper l'alimentation du moteur 7 lorsque l'écart entre la vitesse de consigne et la vitesse mesurée dépasse cette même valeur de seuil (par exemple de 10 à 20%, et de préférence 15%) pendant une deuxième durée prédéterminée, supérieure à la première.

La deuxième durée prédéterminée peut par exemple être de l'ordre de 1 minute 30, ou 2 minutes.

Grâce à cette disposition, l'utilisateur peut être averti d'un risque de surchauffe du moteur, et l'arrêt du moteur peut être déclenché automatiquement lorsque ces risques de surchauffe deviennent critiques.

## Revendications

1. Appareil électrique de traitement de produits alimentaires comportant :
- un carter (3),
- un moteur électrique (7) ayant un arbre de sortie (23) rotatif, agencé dans le carter (3) et prévu pour entraîner un organe (15) de traitement de produits,
- un dispositif (50) de contrôle et de commande du moteur (7), comprenant un dispositif (57) de mesure sans contact de la vitesse de rotation de l'arbre-moteur (23),
**caractérisé en ce que** ledit dispositif de mesure (57) comprend un capteur à effet Hall (58) solidaire du carter (3), et un organe associé (59) de codage, solidaire en rotation de l'arbre (23), et agencé pour influencer ledit capteur (58).

2. Appareil suivant la revendication 1, **caractérisé en ce que** le capteur à effet Hall (58) comprend un organe source (61) produisant un champ magnétique, notamment un aimant permanent, et un organe (62) sensible au champ magnétique de l'organe source (61), espacé de ce dernier, l'organe de codage (59) passant, au moins partiellement, entre l'organe source (61) et l'organe sensible (62) lors de sa rotation solidaire avec l'arbre (23).

3. Appareil suivant la revendication 1 ou 2, **caractérisé en ce que** le dispositif de contrôle et de commande (50) comprend un organe (55) de réglage de la vitesse de consigne du moteur, et un organe de commande (51), relié à l'organe de réglage (55) et au capteur à effet Hall (58), et adapté pour piloter l'alimentation électrique du moteur (7) en fonction de la valeur de vitesse de consigne et de la valeur de vitesse mesurée.

4. Appareil suivant la revendication 3, **caractérisé en ce que** l'organe de commande (51) est adapté pour réguler la vitesse du moteur (7) sur la vitesse de consigne en utilisant la vitesse mesurée comme variable de contrôle.

5. Appareil suivant la revendication 4, **caractérisé en ce que** l'organe de commande (51) est adapté pour calculer l'écart entre la valeur de consigne et la valeur mesurée de la vitesse, et **en ce que** le dispositif de contrôle et de commande (50) comprend un témoin de surcharge (65), relié à l'organe de commande (51), et activé par ce dernier lorsque l'organe détermine que ledit écart dépasse une valeur de seuil prédéterminée pendant une première durée prédéterminée.

6. Appareil suivant la revendication 5, **caractérisé en ce que** l'organe de commande (51) est adapté pour couper l'alimentation du moteur (7) lorsqu'il détecte que ledit écart dépasse ladite valeur de seuil prédéterminée pendant une deuxième durée prédéterminée.

7. Appareil suivant la revendication 6, **caractérisé en ce que** la deuxième durée prédéterminée est supérieure à la première durée prédéterminée.
